(19) Europäisches Patentamt

European Patent Office

Office européen des brevets

(11) **EP 1 319 860 B1**

(12) **EUROPEAN PATENT SPECIFICATION**

(45) Date of publication and mention
of the grant of the patent:
**06.07.2005 Bulletin 2005/27**

(51) Int Cl.⁷: **F16D 69/00**, F16D 69/02,
F16D 13/60

(21) Application number: **02027774.5**

(22) Date of filing: **11.12.2002**

(54) **Dry clutch facing and its manufacturing method**

Trockenkupplungsreibebelag und Verfahren zu seiner Herstellung

Garniture pour embrayage à sec et procédé de fabrication

(84) Designated Contracting States:
**DE FR GB**

(30) Priority: **12.12.2001 JP 2001378857**

(43) Date of publication of application:
**18.06.2003 Bulletin 2003/25**

(73) Proprietor: **AISIN KAKO KABUSHIKI KAISHA**
**Nishikamo-gun, Aichi-ken 470-0451 (JP)**

(72) Inventor: **Katsukawa, Masahiro,**
**c/o Aisin Kako K.K.**
**Nishikamo-gun, Aichi-ken, 470-0451 (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(56) References cited:
WO-A-97/14747      DE-A- 3 516 759
DE-C- 19 614 268

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 319 860 B1

## Description

## BACKGROUND OF THE INVENTION

### FIELD OF THE INVENTION

This invention relates to a dry clutch facing used for an automatic clutch, non-stage transmission and the like of an automobile and its manufacturing method.

### DESCRIPTION OF THE RELATED ART

An automatic clutch that has an automatic control system for a clutch of a manual transmission has been developed and put to practical use more and more. So is a non-stage transmission using a dry clutch facing for a start clutch. A dry clutch facing used in these systems is operated frequently under a half-clutch state for improving feeling in starting or changing a gear. Thus, the clutch facing becomes very hot. Moreover, if the clutch facing is operated under a creep control in order to prevent moving-back at the time of climbing, it continuously slips and becomes much hotter. Sulfur is mixed in the dry clutch facing for cross-linking rubber. Then, the sulfur is changed into a gas, which is supposed to be $H_2S$ or $CS_2$, due to the heat and generates odor. The odor may enter into a cabin of a car and cause problem.

The dry clutch facing is composed of glass fibers, a synthetic resin and a compounded rubber. The sulfur is the most suitable for cross-linking the compounded rubber in view of costs and abrasion resistance. Therefore, it is very hard to stop use or reduce amount of the sulfur. Consequently, a method has been examined in which heat is applied to a surface of the clutch facing by a hot plate in advance. This method is theoretically based on a rule of thumb that, once the dry clutch facing has given out odor, it never sends out odor even if it is applied with the same heat load. However, it anticipated that, since an entire surface of the clutch facing is heated, the clutch facing becomes very hot so as to be warped even if it is slowly cooled at the time of cooling. Moreover, it is anticipated that an apparatus becomes large-sized and complicated.

### BRIEF SUMMARY OF THE INVENTION

An object of the present invention is to provide a manufacturing method of a dry clutch facing that is capable of efficiently removing sulfur so as to prevent odor and generate no warp, and a dry clutch facing which does not generate odor.

According to a first aspect of the invention, there is provided a manufacturing method of a dry clutch facing as defined in claim 1, said method being characterized in that a laser beam is irradiated on the sulfur in the surface layer portion of the dry clutch facing so as to burn and remove the sulfur.

Treating surfaces with a laser beam is known in other technical fields. For example, DE 35 16 759 A1 discloses irradiating a laser beam on a frictional engagement surface of a brake pad made of a sponge iron friction material composed of iron powder, sponge iron particles, barium sulfate, steel fiber, rubber particles, graphite, and phenolic resin. The laser treatment improves initial friction when the brake pad is brought into contact with a brake drum or rotor. However, treating the surface layer portion of a dry clutch facing to prevent odor is not known.

According to a second aspect of the invention, there is provided a dry clutch facing as defined in claim 5, said dry clutch facing initially having a surface layer portion in which sulfur exists for cross-linking a compounded rubber and being characterized by a carbonized layer at the surface layer portion in which the sulfur is burnt and removed. The carbonized layer is obtained by laser beam irradiation used for burning and removing the sulfur.

Further objects and advantages of the invention will be apparent from the following description, reference being had to the accompanying drawings, wherein preferred embodiments of the invention are clearly shown.

### BRIEF DESCRIPTION OF THE SEVERAL VIEWS OF THE DRAWINGS

FIG. 1 is a schematic drawing showing an apparatus for removing sulfur by a laser beam.
FIG. 2 is a graph comparing an odor level after the laser beam is irradiated.
FIG. 3 is a graph showing a relation between sulfur removing methods and a warp amount of a dry clutch facing.
FIG. 4 is a graph showing a relation between a thickness of a carbonized layer and an odor leveL
FIG. 5 is a graph showing a relation between a thickness of a carbonized layer and a wear rate.

### DETAILED DESCRIPTION OF THE INVENTION

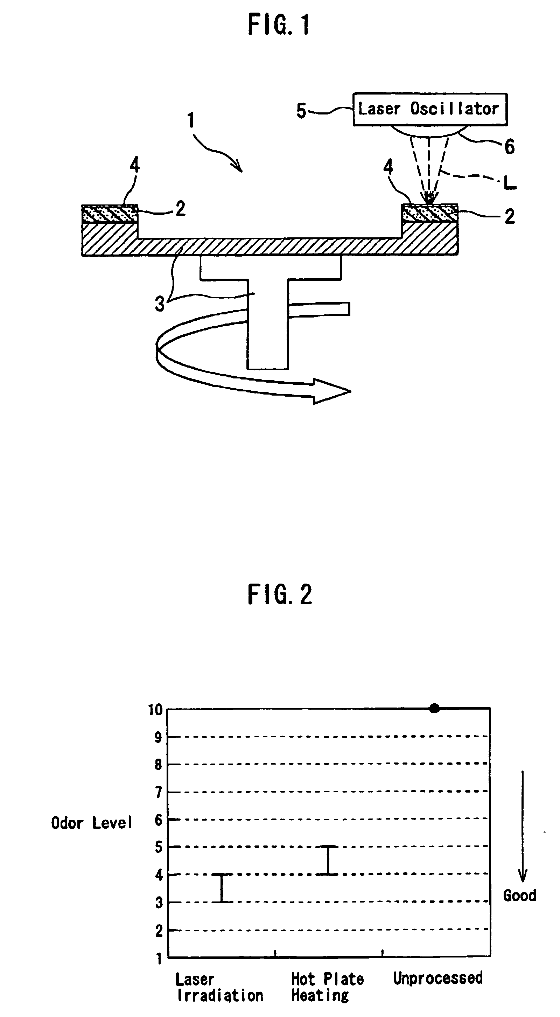

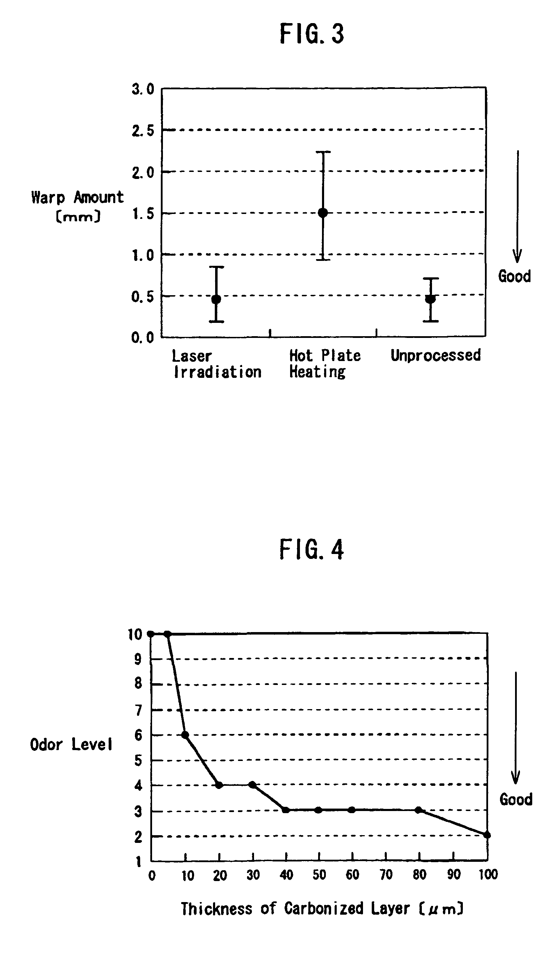

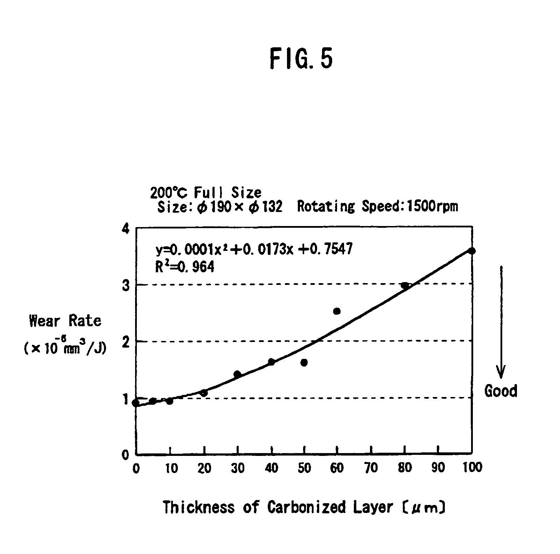

An embodiment of the invention is described hereunder referring to Fig. 1 to Fig. 5. FIG. 1 is a schematic drawing showing an apparatus for removing sulfur by a laser beam. FIG. 2 is a graph comparing an odor level after the laser beam is irradiated. FIG. 3 is a graph showing a relation between sulfur removing methods and a warp amount of a dry clutch facing. FIG. 4 is a graph showing a relation between a thickness of a carbonized layer and an odor level. FIG. 5 is a graph showing a relation between a thickness of a carbonized layer and a wear rate.

A dry clutch facing according to the present embodiment is composed of glass fibers, a synthetic resin and a compounded rubber. Sulfur is used to cross-link the compounded rubber. As mentioned above, when the dry clutch facing becomes at high temperature, the sulfur is gasified and odor enters into a cabin of a car. Therefore, a laser beam is irradiated on a surface layer part of the dry clutch facing so as to remove the sulfur.

First, a method of removing the sulfur by the laser beam is described referring to Fig. 1. A laser beam sulfur removing apparatus 1 of the present embodiment is configured as shown in Fig. 1. A dry clutch facing 2 is a ring-shaped flat plate and placed on a turntable 3. A turntable 3 has a ring-shaped protruding portion at an outer circumference thereof that has a same dimension as the clutch facing 2 and on which the clutch facing 2 is placed. The turntable 3 is rotated by a not-shown motor so as to vary a rotating speed. A laser beam L is emitted from a laser oscillator 5 and focused at a location of the ring-shaped protruding portion of the turntable 3 by an optical system such as a convex lens 6 Then, the surface layer of the dry clutch facing 2 disposed on the turntable 3 is heated by a condensed laser beam 3. Thus, the sulfur at the surface layer is burned and removed. At the same time, the synthetic resin and the compounded rubber at the surface layer are carbonized by the heat of the laser beam and gradually change into a carbonized layer.

A degree of removing the sulfur and a thickness of the carbonized layer change depending on a condition of irradiation of the laser beam. In the present embodiment, a carbon dioxide gas $(CO_2)$ laser oscillator is used as the laser oscillator 5. The laser beam was irradiated under a condition of an irradiation output of 11W, an irradiation time of 20 minutes, a rotating speed of the turntable of 100rpm. As a result, an odor level was 3 and a thickness of a formed carbonized layer was 40 $\mu$m.

A measurement of the odor level of the sulfur is carried out by a sensory evaluation or sensory test. That is, a sample of the dry clutch facing 2 that has been processed by a sulfur removing treatment is pressed to a hot plate of 300°C. Then, an intensity of the odor of a generated sulfur gas is ranked among eleven levels of 0 to 10 by the sensory evaluation, while 10 is a odor level of an unprocessed sample.

Next, a relation between sulfur removing methods and odor levels obtained thereby is described referring to Fig. 2. The odor levels were obtained and compared herein after the measurements for the present embodiment of a laser irradiation method and a hot plate heating method as prior art, while conditions being changed respectively therefor. As shown in Fig. 2, they are compared by the sensory evaluation while 10 shows the case of the unprocessed sample. Consequently, an odor level of 3 to 4 was obtained in case of the laser irradiation method. An odor level of 4 to 5 was obtained in case of the hot plate heating method. Thus, it was confirmed that the laser irradiation method was superior a little.

Next, a relation between the sulfur removing methods and warp amounts of the dry clutch facing 2 obtained thereby are described referring to Fig. 3. The warp amounts were obtained and compared herein after the measurements for the present embodiment of a laser irradiation method and a hot plate heating method as prior art, while conditions being changed respectively therefor. Consequently, the clutch facing 2 was warped at about 0.9 to 2.2mm in case of the hot plate heating method. In contrast, the warp amount of the clutch facing 2 was at about 0.2 to 0.8mm in case of the laser irradiation method. Thus, it was confirmed that the warp amount in case of the laser irradiation method was essentially the same as the unprocessed dry clutch facing 2.

As described above, the dry clutch facing 2 obtained by the present embodiment of the laser irradiation method has the sulfur at the surface layer removed substantially completely and the odor level is low. Moreover, the present embodiment of the laser irradiation method is capable of heating only the surface layer of the clutch facing 2. Then, an interior of the clutch facing 2 does not become hot. Consequently, the warp is hardly generated on the clutch facing 2. Thus, the present embodiment of the clutch facing 2 is an excellent dry clutch facing, while the laser irradiation method is an excellent manufacturing method for the dry clutch facing according to the present embodiment.

Next, a relation between thickness of the carbonized layer 4 formed on the surface layer of the dry clutch facing 2 in removing the sulfur by the laser irradiation and odor levels is described referring to Fig. 4. The odor levels were measured by the sensory evaluation under the same conditions as mentioned above. As shown in Fig. 4, the odor level gradually decreases as the thickness of the carbonized layer 4 increases. However, the odor level becomes 3 or 4 and stable where the thickness of the carbonized layer 4 is 20 $\mu$m or more. Accordingly, it is possible to obtain a dry clutch facing 2 having very small odor generation if the condition of the laser irradiation is determined so that the thickness of the carbonized layer 4 becomes 20 $\mu$m or more.

Next, a relation between thickness of the carbonized layer 4 and wear rates is described referring to Fig. 5. Fig. 5 is a graph showing a correlation between the thickness of the carbonized layer 4 and the wear rates. An experiment was conducted under a condition as shown in Fig. 5. Test results were plotted in the graph and the method of least squares was applied thereto. Then, a correlation of a quadratic equation recited in the graph was obtained as follows.

$$y=0.0001x^2+0.0173x+0.7547$$

A correlation degree thereof is a square of a correlation coefficient R, that is, 0.964 and very high.

Accordingly, if the thickness of the carbonized layer 4 becomes too large, the abrasion becomes noticeable and not preferable for the dry clutch facing 2. From the test results, 80 μm is a limit as the thickness of the carbonized layer 4.

Consequently, it is possible to obtain a dry clutch facing 2 of an excellent characteristic that has very small odor generation and a small abrasion, if the condition of the laser irradiation is determined so that the thickness of the carbonized layer 4 becomes not less than 20 μm and not more than 80 μm.

In the present embodiment, the carbon dioxide gas ($CO_2$) laser oscillator is used as the laser oscillator 5. However, it is possible to use another laser oscillator such as YAG laser.

The present invention is not limited to those of the above-mentioned embodiment with respect to the other structures, the shape, the number or amount, the material, the dimension, the configuration of connection and the like of the dry clutch facing as well as the other steps of the manufacturing method of the dry clutch facing.

Advantageous effects of the present invention are as follows.

The dry clutch facing 2 is obtained by irradiating the laser beam L on the sulfur existing in the surface layer portion so as to burn and remove the sulfur. Therefore, the sulfur at the surface layer portion of the dry clutch facing is burned and removed by the heat of the laser beam. Thus, if the dry clutch facing becomes very hot by a half-clutch or a continuous slip, the sulfur gas is not generated and the odor is prevented. Moreover, the laser beam is capable of heating only the surface layer portion of the dry clutch facing at a very high temperature, so that the interior of the dry clutch facing does not become hot and is not warped accordingly.

It is preferable that the carbonized layer generated at the surface layer portion of the dry clutch facing 2 by the irradiation of the laser beam L has a thickness of about 20 to 80 μm.

The dry clutch facing is composed of the glass fibers, the synthetic resin and the compounded rubber. Therefore, the synthetic resin and the compounded rubber are carbonized when the surface layer becomes hot in removing the sulfur of the surface layer by the laser beam irradiation. If the thickness of the carbonized layer becomes 20 μm or more, the sulfur at the surface layer is removed substantially completely. If the thickness of the carbonized layer becomes more than 80 μm, the abrasion becomes remarkable due to friction. Accordingly, the thickness of the carbonized layer should be kept not more than 80 μm.

As mentioned above, the dry clutch facing and its manufacturing method are capable of efficiently removing sulfur so as to prevent odor and generate no warp.

The preferred embodiments described herein are illustrative and not restrictive, the scope of the invention being indicated in the appended claims and all variations which come within the meaning of the claims are intended to be embraced therein.

## Claims

1. A manufacturing method of a dry clutch facing, said method comprising the manufacturing of a dry clutch facing (2) initially with a surface layer portion in which sulfur exists, **characterized in that** said method further comprises irradiating a laser beam (L) on the sulfur in the surface layer portion of the dry clutch facing (2) so as to burn and remove the sulfur.

2. A manufacturing method of a dry clutch facing (1) as recited in claim 1, wherein the surface layer portion initially contains a compounded rubber which is crosslinked by the sulfur.

3. A manufacturing method of a dry clutch facing (1) as recited in claim 2, wherein the surface layer portion is initially composed of glass fibers, a synthetic resin and the compounded rubber.

4. A manufacturing method of a dry clutch facing (1) as recited in any one of claims 1 to 3, in which a carbonized layer (4) is generated at the surface layer portion by the irradiation of the laser beam (L) and the carbonized layer (4) has a thickness of about 20 to 80 μm.

5. A dry clutch facing (2) initially having a surface layer portion in which sulfur exists for cross-linking a compounded rubber, **characterized by** a carbonized layer (4) at the surface layer portion in which the sulfur is burnt and removed, said carbonized layer (4) being obtained by laser beam irradiation used for burning and removing the sulfur.

6. A dry clutch facing (1) as recited in claim 5, wherein the surface layer portion is initially composed of glass fibers, a synthetic resin and the compounded rubber.

7. A dry clutch facing (1) as recited in claim 5 or 6, in which the carbonized layer (4) has a thickness of about 20 to 80 μm.

## Patentansprüche

1. Herstellungsverfahren für einen Trockenkupplungsbelag, wobei das Verfahren die Herstellung eines Trockenkupplungsbelags (2), anfänglich mit einem schwefelhaltigen Oberflächenschichtanteil, umfaßt,

**dadurch gekennzeichnet, daß**

das Verfahren ferner die Einstrahlung eines Laserstrahls (L) auf den Schwefel in dem Oberflächenschichtabschnitt des Trockenkupplungsbelags (2) umfaßt, so daß der Schwefel verbrannt und entfernt wird.

2. Das Herstellungsverfahren für einen Trockenkupplungsbelag (1) nach Anspruch 1, wobei der Oberflächenschichtabschnitt anfänglich einen Verbundkautschuk enthalt, welcher durch den Schwefel vernetzt wurde.

3. Das Herstellungsverfahren für einen Trockenkupplungsbelag (1) nach Anspruch 2, wobei der Oberflachenschichtabschnitt anfanglich aus Glasfasern, einem synthetischen Harz und dem Verbundkautschuk zusammengesetzt ist.

4. Das Herstellungsverfahren für einen Trockenkupplungsbelag (1) nach einem der Ansprüche 1 bis 3, in welchem durch die Einstrahlung des Laserstrahls (L) eine karbonisierte Schicht (4) auf dem Oberflächenschichtabschnitt erzeugt wird und die karbonisierte Schicht (4) eine Dicke von etwa 20 bis 80 μm aufweist.

5. Trockenkupplungsbelag (2), welcher anfanglich einen Oberflächenschichtabschnitt aufweist, in dem Schwefel zum Vernetzen eines Verbundkautschuks vorhanden ist,

**gekennzeichnet durch**

eine karbonisierte Schicht (4) an dem Oberflachenschichtabschnitt, in welchem der Schwefel verbrannt und entfernt wurde, wobei die karbonisierte Schicht (4) **durch** Einstrahlung eines Laserstrahls erhalten wurde, welcher für das Verbrennen und Entfernen des Schwefels verwendet wurde.

6. Der Trockenkupplungsbelag (1) nach Anspruch 5, wobei der Oberflächenschichtanteil anfänglich aus Glasfasern, einem synthetischen Harz und dem Verbundkautschuk zusammengesetzt ist.

7. Der Trockenkupplungsbelag (1) nach Anspruch 5 oder 6, in welchem die karbonisierte Schicht (4) eine Dicke von etwa 20 bis 80 μm aufweist.

## Revendications

1. Procédé de fabrication d'un revêtement d'embrayage à sec, ledit procédé comprenant la fabrication d'un revêtement (2) d'embrayage à sec initialement avec une partie de couche de surface dans laquelle on trouve du soufre, **caractérisé en ce que** ledit procédé comprend en outre l'irradiation par un faisceau laser (L) du soufre sur la partie de couche de surface du revêtement (2) d'embrayage à sec afin de brûler et retirer le soufre.

2. Procédé de fabrication d'un revêtement (1) d'embrayage à sec selon la revendication 1, dans lequel la partie de couche de surface contient initialement un caoutchouc composé qui est réticulé par le soufre.

3. Procédé de fabrication d'un revêtement (1) d'embrayage à sec selon la revendication 2, dans lequel la partie de couche de surface est initialement composée de fibres de verre, d'une résine synthétique, et du caoutchouc composé.

4. Procédé de fabrication d'un revêtement (1) d'embrayage à sec selon l'une quelconque des revendications 1 à 3, dans lequel une couche (4) carbonisée est générée au niveau de la partie de couche de surface par l'irradiation par le faisceau laser (L) et la couche (4) carbonisée présente une épaisseur d'environ 20 à 80 μm.

5. Revêtement (2) d'embrayage à sec ayant initialement une partie de couche de surface dans laquelle on trouve du soufre pour une réticulation avec un caoutchouc composé, **caractérisé par** une couche (4) carbonisée au niveau de la partie de couche de surface dans laquelle le soufre est brûlé et retiré, ladite couche (4) carbonisée étant obtenue par l'irradiation par faisceau laser utilisée pour brûler et retirer le soufre.

6. Revêtement (1) d'embrayage à sec selon la revendication 5, dans lequel la partie de couche de surface est initialement composée de fibres de verre, d'une résine synthétique et du caoutchouc composé.

7. Revêtement (1) d'embrayage à sec selon la revendication 5 ou 6, dans lequel la couche (4) carbonisée présente une épaisseur d'environ 20 à 80 μm.

## FIG. 1

## FIG. 2

# FIG. 3

# FIG. 4

# FIG. 5

200°C Full Size
  Size: $\phi$190 × $\phi$132   Rotating Speed: 1500rpm

Wear Rate

$(\times 10^{-6} mm^3 / J)$

$y = 0.0001x^2 + 0.0173x + 0.7547$
$R^2 = 0.964$

Good

Thickness of Carbonized Layer $[\mu m]$